# EUROPÄISCHE PATENTSCHRIFT

(11) **EP 1 444 240 B1**
(45) Veröffentlichungstag und Bekanntmachung des Hinweises auf die Patenterteilung: **13.04.2005**
(21) Anmeldenummer: 02785385.2
(22) Anmeldetag: 13.11.2002
(51) Int. Cl.: C07F 7/21

(54) **VERFAHREN ZUR HERSTELLUNG FUNKTIONALISIERTER OLIGOMERER SILASESQUIOXANE SOWIE DEREN VERWENDUNG**
METHOD FOR PRODUCING FUNCTIONALISED OLIGOMERIC SILSESQUIOXANES AND THE USE OF THE SAME
PROCEDE POUR LA PRODUCTION DE SILSESQUIOXANES OLIGOMERIQUES FONCTIONNALISES ET LEUR UTILISATION

(30) Priorität: 17.11.2001 DE 10156619
(43) Veröffentlichungstag der Anmeldung: 11.08.2004
(73) Patentinhaber: Creavis Gesellschaft für Technologie und Innovation mbH, 45772 Marl (DE)
(72) Erfinder: JOST, Carsten, 45770 Marl (DE); KÜHNLE, Adolf, 45770 Marl (DE); ABBENHUIS, Hendrikus, Cornelis, Louis, NL-5672 RB Nuenen (NL)
(74) Vertreter: Lang, Arne, Dr.
(86) Internationale Anmeldenummer: PCT/EP2002/012678
(87) Internationale Veröffentlichungsnummer: WO 2003/042223

(56) Entgegenhaltungen:
- EP-A- 0 464 836
- WO-A-00/76634
- US-A- 5 412 053
- FEHER F J ET AL: "SILSESQUIOXANES AND SPHEROSILICATES AS PRECURSORS TO HYBRID INORGANIC/ORGANIC MATERIALS" POLYMERIC MATERIALS SCIENCE AND ENGINEERING, WASHINGTON, DC, US, Bd. 82, 2000, Seiten 301-302, XP001037239 ISSN: 0743-0515
- DESCHLER ET AL: "3-CHLOROPROPYLTRIALKOXYSILANES - KEY INTERMEDIATES FOR THE COMMERCIAL PRODUCTION OF ORGANOFUNCTIONALIZED SILANES AND POLYSILOXANES" ANGEWANDTE CHEMIE. INTERNATIONAL EDITION, VERLAG CHEMIE. WEINHEIM, DE, Bd. 25, 1986, Seiten 236-252, XP002120027 ISSN: 0570-0833
- FEHER F J ET AL: "SILSESQUIOXANES AS MODELS FOR SILICA SURFACES" JOURNAL OF THE AMERICAN CHEMICAL SOCIETY, AMERICAN CHEMICAL SOCIETY, WASHINGTON, DC, US, Bd. 111, 1. März 1989 (1989-03-01), Seiten 1741-1748, XP001037318 ISSN: 0002-7863 in der Anmeldung erwähnt
- FEHER F J ET AL: "CONTROLLED PARTIAL HYDROLYSIS OF SPHEROSILICATE FRAMEWORKS: SYNTHESES OF ENDO-(ME3SIO)6SI6O7(OH)4 AND ENDO-(ME3SIO)6SI6O7äOSIME2(CH=CH2)ü4 FROM (ME3SIO)6SI6O9" CHEMICAL COMMUNICATIONS, ROYAL SOCIETY OF CHEMISTRY, GB, 1999, Seiten 2513-2514, XP001038447 ISSN: 1359-7345

## Beschreibung

Die Erfindung betrifft ein Verfahren zur Herstellung funktionalisierter oligomerer Silasesquioxane.

Oligomere Silasesquioxane können zur Synthese und Modifizierung von Polymeren mit einem breiten Anwendungsfeld verwendet werden. Die daraus resultierenden Polymere können beispielsweise in Coatings und Klebstoffen, in Formteilen aus Kunststoff, in Fasern oder Verpackungsmaterialien Verwendung finden. Dadurch, dass die Silasesquioxane hinsichtlich ihrer Struktur in einer großen Variationsbreite hergestellt werden können, sind die Eigenschaften der aus Silasesquioxanen herstellbaren bzw. mit ihnen modifizierbaren Polymere über einen großen Bereich beeinflussbar. Zahlreiche thermische und mechanische Eigenschaften von Polymeren lassen sich durch das Blending, Grafting, Aufpropfen, Copolymerisieren bzw. Copolykondensation von Silasesquioxanen verbessern, so sind z. B. hier die verschiedenen Moduli, die Temperaturstabilität, die Haftungseigenschaften gegenüber einer Vielzahl von Werkstoffen, die Oxidationsstabilität und die Kratz- und Reißfestigkeit zu nennen.

Neuerdings gewinnen metallhaltige Silasesquioxane auch hinsichtlich ihrer möglichen Verwendung als Katalysatoren immer mehr an Bedeutung (*Chem*. *Eur. J.* 2000, *6,* 25-32). *Feher et al.* (*J. Am. Chem. Soc.* 1989, *111*, 1741-8) beschreiben die Synthese von verschiedenartig funktionalisierten oligomeren Silasesquioxanen der Struktur **1** (X = funktionelle Gruppe bzw. funktionalisierter Rest, R = Kohlenwasserstoffrest) durch sogenanntes "Corner Capping" der oligomeren Silasesquioxan-Trisilanole der Struktur **2** mit funktionalisierten Trichlorsilanen XSiCl₃ in Gegenwart eines Amins. Dabei entsteht ungünstigerweise die dreifach stöchiometrische Menge an Ammoniumchloriden als Nebenprodukt der Kondensationsreaktion des Trisilanols **2** mit den Trichlorsilanen XSiCl₃. Außerdem muss aufgrund der Hydrolyseempfindlichkeit der Trichlorsilane unter striktem Feuchtigkeitsausschluss gearbeitet werden. Von Nachteil ist die Verwendung von Trichlorsilanen auch deshalb, da diese Verbindungen in vielen Fällen relativ teuer sind. Die analogen Trialkoxysilane XSi(OR')₃ sind oftmals kostengünstiger als die Trichlorsilane erhältlich. In "Silsesquioxanes and Spherosilicates as Precursors to Hybrid inorganic/organic Materials' polymeric Materials Science and Engineering, Washington DC, US, Bd. 82, 2000, Seite 301-302" beschreiben Feher et al. ein Verfahren, in dem ein Tetrasilanol (C₆H₁₁)₆Si₆O₇(OH)₄ mit Et₄NOH in THF und Silanmonomeren RSi(OCH₃)₃ zu Trisilanol (C₆H₁₁)₆RSi₇O₈(OH)₃ umgesetzt werden. Feher et al. beschreiben jedoch keine detaillierte Angaben zu den Reaktionsbedingungen.

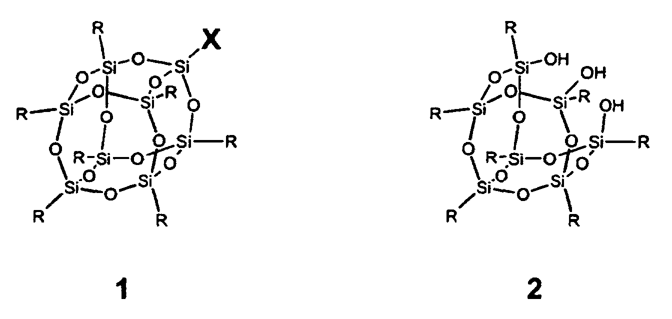

Auch *Lichtenhan et al.* (*US 5484867; Comments Inorg. Chem.* 1995, *17,* 115-30; *Macromolecules* 1996, *29,* 7302-4; *Macromolecules* 1995, *28,* 8435-7) beschreiben die Synthese von funktionalisierten oligomeren Silasesquioxanen der Struktur **1** durch Corner Capping der jeweiligen Trisilanol-Vorstufen **2** mit den Trichlorsilan-Bausteinen XSiCl₃ unter Verwendung einer Amin-Base, wodurch über die funktionelle Gruppe X Silanol-, Silan-, Acryl-, Olefin-, Epoxid-, Halogen-, Alkohol-, Amin-, Isocyanat-Funktionen in das oligomere Silasesquioxan-Molekül eingeführt werden können.

Die bisherigen literaturbekannten Methoden erfordern die ungünstige Verwendung der teuren Trichlorsilan-Bausteine XSiCl₃ unter Verwendung einer Amin-Base (*Appl*. *Organomet. Chem*. 1999, *13*, 213-26) und ziehen notwendigerweise die aufwendige Abtrennung des entstehenden Ammoniumchloridsalzes nach sich. Das Arbeiten mit Trichlorsilanen erfordert außerdem den strikten Ausschluss von Feuchtigkeit und ist damit ebenfalls sehr aufwendig.

Die Aufgabe der Erfindung bestand deshalb darin, ein allgemein einsetzbares, effizientes Verfahren zur Herstellung funktionalisierter oligomerer Silasesquioxane durch Umsetzung unvollständig kondensierter Silasesquioxane mit Alkoxysilanen bereitzustellen. Insbesondere war Aufgabe des vorliegenden Verfahrens, ein einfaches und effizientes Verfahren zur Herstellung funktionalisierter oligomerer Silasesquioxane der Struktur **1** durch Corner Capping der Trisilanole der Struktur **2** (X = funktionelle Gruppe bzw. funktionalisierter Rest, R = Kohlenwasserstoffrest) bereitzustellen, welches bei der Umsetzung ohne Chlorsilane auskommt.

Überraschenderweise wurde gefunden, dass funktionalisierte oligomere Silasesquioxane durch Reaktion unvollständig kondensierter oligomerer Silasesquioxane mit Alkoxysilanen auf einfache Weise hergestellt werden können. Insbesondere lassen sich dabei funktionalisierte Silasesquioxane der Struktur **1** durch Corner Capping von unvollständig kondensierten oligomeren Silasesquioxanen der Struktur **2** mit Alkoxysilan-Monomeren XSi(OR')₃ unter Basenkatalyse synthetisieren, wobei **X** eine Wasserstoff-, Oxy-, Hydroxy-, Alkoxy-, Carboxy-, Silyl-, Silyloxy-, Halogen-, Epoxy-, Ester-, Fluoralkyl-, Isocyanat-, Acrylat-, Methacrylat-, Nitril-, Amino-, Phosphingruppe, wobei - sofern möglich - diese Reste **X** ihrerseits wiederum weiter funktionalisiert sein können, oder/und einen substituierten oder unsubstituierten Alkyl-, Cycloalkyl-, Alkenyl-, Cycloalkenyl-, Alkinyl-, Cycloalkinyl-, Aryl-, Heteroarylrest, der mit Oxy-, Hydroxy-, Alkoxy-, Carboxy-, Silyl-, Silyloxy-, Halogen-, Epoxy-, Ester-, Fluoralkyl-, Isocyanat-, Acrylat-, Methacrylat-, Nitril-, Amino-, Phosphingruppen funktionalisiert ist, darstellt. **R** stellt ein Wasserstoffatom, einen substituierten oder unsubstituierten Alkyl-, Cycloalkyl-, Alkenyl-, Cycloalkenyl-, Alkinyl-, Cycloalkinyl-, Aryl-, Heteroarylrest oder ganz oder teilweise eine Gruppe X dar. **R'** stellt ein Wasserstoffatom, einen substituierten oder unsubstituierten Alkyl-, Cycloalkyl-, Alkenyl-, Cycloalkenyl-, Alkinyl-, Cycloalkinyl-, Aryl-, Heteroarylrest dar.

Gegenstand der vorliegenden Erfindung ist daher ein Verfahren zur Herstellung funktionalisierter oligomerer Silasesquioxane, welches dadurch gekennzeichnet ist, dass unvollständig kondensierte oligomere Silasesquioxane mit Alkoxysilanen umgesetzt werden und das Stoffmengenverhältnis des unvollständig kondensierten oligomeren Silasesquioxans zum basischen Katalysator von 1000:1 bis 1:1 beträgt.

Die vorliegende Erfindung hat gegenüber den literaturbekannten Methoden, die Chlorsilane als Reagenzien beinhalten, den Vorteil, dass mit Alkoxysilanen kostengünstige Reagenzien zum Einsatz kommen, was die Wirtschaftlichkeit des Syntheseverfahrens für funktionalisierte oligomere Silasesquioxane erhöht. Des weiteren ist ein Arbeiten unter striktem Feuchtigkeitsausschluss ebenso wenig erforderlich wie die Abtrennung und Entsorgung der stöchiometrischen Mengen an Ammoniumchlorid-Salzen, die bei der bisher üblichen Reaktion von Silanolen mit Chlorsilanen, insbesondere Trichlorsilanen XSiCl₃, und Aminen gebildet werden. Durch die Vermeidung von großen Mengen Ammoniumsalzen kann mit dem erfindungsgemäßen Verfahren vermieden werden, dass diese Salze als Abfall kostenintensiv entsorgt werden müssen.

Mittels des erfindungsgemäßen Verfahrens ist damit ein effizienter, neuartiger Weg zur Herstellung von funktionalisierten oligomeren Silasesquioxanen durch basenkatalysiertes Corner Capping unvollständig kondensierter oligomerer Silasesquioxane mit Alkoxysilanen eröffnet worden. Die Bereitstellung eines effizienten, kostengünstigen Herstellungsverfahrens für funktionalisierte oligomere Silasesquioxane ist von großer Bedeutung, da diese nicht nur für weitere Derivatisierungen, für die Synthese von Katalysatoren und deren Ausgangsverbindungen, sondern auch durch Copolymerisation, Aufpfropfen, Grafting und Blending für die Synthese und Modifizierung einer Vielzahl von Polymeren eingesetzt werden können.

Das erfindungsgemäße Verfahren wird im Folgenden beispielhaft beschrieben, ohne dass das Verfahren darauf beschränkt sein soll.

Das erfindungsgemäße Verfahren zur Herstellung funktionalisierter oligomerer Silasesquioxane zeichnet sich dadurch aus, dass unvollständig kondensierte oligomere Silasesquioxane mit Alkoxysilanen umgesetzt werden und das Stoffmengenverhältnis des unvollständig kondensierten oligomeren Silasesquioxans zum basischen Katalysator von 1000:1 bis 1:1 beträgt. Vorzugsweise erfolgt die Umsetzung der unvollständig kondensierten oligomeren Silasesquioxane mit Alkoxysilanen unter Basenkatalyse. Als Alkoxysilane werden bevorzugt Verbindungen der Formel XₘSi(OR')ₙ eingesetzt, wobei **X** eine Wasserstoff-, Oxy-, Hydroxy-, Alkoxy-, Carboxy-, Silyl-, Silyloxy-, Halogen-, Epoxy-, Ester-, Fluoralkyl-, Isocyanat-, Acrylat-, Methacrylat-, Nitril-, Amino-, Phosphingruppe, wobei - sofern möglich - diese Reste **X** ihrerseits wiederum weiter funktionalisiert sein können, und/oder einen substituierten oder unsubstituierten Alkyl-, Cycloalkyl-, Alkenyl-, Cycloalkenyl-, Alkinyl-, Cycloalkinyl-, Aryl-, Heteroarylrest, der mit Oxy-, Hydroxy-, Alkoxy-, Carboxy-, Silyl-, Silyloxy-, Halogen-, Epoxy-, Ester-, Fluoralkyl-, Isocyanat-, Acrylat-, Methacrylat-, Nitril-, Amino-, Phosphingruppen funktionalisiert ist, darstellen können, **R'** ein Wasserstoffatom, einen substituierten oder unsubstituierten Alkyl-, Cycloalkyl-, Alkenyl-, Cycloalkenyl-, Alkinyl-, Cycloalkinyl-, Aryl-, Heteroarylrest darstellen kann, wobei die Reste **R'** gleich oder unterschiedlich sein können und m und n Werte von 1 bis 3 einnehmen können mit der Maßgabe, das die Summe aus m und n 4 ergibt. Besonders bevorzugt werden Alkoxysilane der Formel XSi(OR')₃, ganz besonders solche, bei denen **X** nicht ein Halogen oder ein Hydroxy-, Alkoxy- oder Silyloxyrest darstellt, eingesetzt.

Das erfindungsgemäße Verfahren eignet sich insbesondere zur Herstellung von funktionalisierten oligomeren Silasesquioxanen der Struktur **1** 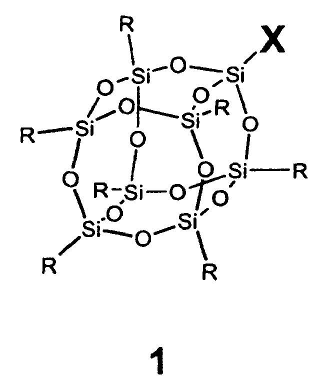 durch Reaktion unvollständig kondensierter oligomerer Silasesquioxane der Struktur **2** als Edukte 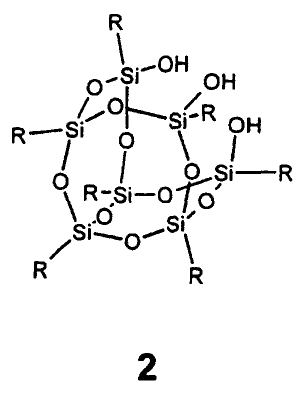 mit Alkoxysilanen XₘSi(OR')ₙ, vorzugsweise XSi(OR')₃, unter Basenkatalyse,
wobei **X** eine Wasserstoff-, Oxy-, Hydroxy-, Alkoxy-, Carboxy-, Silyl-, Silyloxy-, Halogen-, Epoxy-, Ester-, Fluoralkyl-, Isocyanat-, Acrylat-, Methacrylat-, Nitril-, Amino- oder Phosphingruppe, wobei - sofern möglich - diese Reste **X** ihrerseits wiederum weiter funktionalisiert sein können, oder/und einen substituierten oder unsubstituierten Alkyl-, Cycloalkyl-, Alkenyl-, Cycloalkenyl-, Alkinyl-, Cycloalkinyl-, Aryl-, Heteroarylrest, der mit Oxy-, Hydroxy-, Alkoxy-, Carboxy-, Silyl-, Silyloxy-, Halogen-, Epoxy-, Ester-, Fluoralkyl-, Isocyanat-, Acrylat-, Methacrylat-, Nitril-, Amino-, Phosphingruppen funktionalisiert ist, darstellen können, **R** ein Wasserstoffatom, einen substituierten oder unsubstituierten Alkyl-, Cycloalkyl-, Alkenyl-, Cycloalkenyl-, Alkinyl-, Cycloalkinyl-, Aryl-, Heteroarylrest oder ganz oder teilweise eine Gruppe **X** darstellen kann und **R'** ein Wasserstoffatom, einen substituierten oder unsubstituierten Alkyl-, Cycloalkyl-, Alkenyl-, Cycloalkenyl-, Alkinyl-, Cycloalkinyl-, Aryl-, Heteroarylrest darstellen kann.

Das erfindungsgemäße Verfahren zur Funktionalisierung unvollständig kondensierter oligomerer Silasesquioxane ist aber nicht auf Substrate der Struktur **2** beschränkt, sondern kann generell zur Umsetzung und damit zur Derivatisierung aller unvollständig kondensierten oligomeren Silasesquioxane mit verschiedensten Alkoxysilanen eingesetzt werden, wobei die Alkoxysilane ein, zwei, drei oder vier Alkoxygruppen am Si-Atom besitzen können. Die durch die erfindungsgemäße Umsetzung gebildeten funktionalisierten oligomeren Silasesquioxane müssen nicht die Struktur 1 aufweisen, sondern können sowohl einfach als auch mehrfach funktionalisiert sein, sie können gleiche oder verschiedene funktionelle Gruppen X besitzen, sie können sowohl vollständig als auch unvollständig kondensiert sein und weitere nicht abgesättigte Hydroxygruppen aufweisen. Als unvollständig kondensierte Silasesquioxane mit einer von der Struktur 2 abweichenden Struktur können z. B. Disilanole, Tetrasilanole, verschiedene, von den würfelförmigen T8-Bausteinen abweichende Käfigstrukturen aufweisende, unvollständig kondensierte Silasesquioxane oder bereits funktionalisierte unvollständig kondensierte Silasesquioxane eingesetzt werden, die allesamt mittels des erfindungsgemäßen Verfahrens nun funktionalisiert werden können, wobei wiederum verschiedenste Strukturen entstehen können.

Zur Steuerung bzw. Beschleunigung der Reaktion ist es vorteilhaft, die Umsetzung in Gegenwart eines basischen Katalysators durchzuführen.

Als basische Katalysatoren werden bevorzugt zumindest solche aus der Gruppe OH⁻, RO⁻, RCOO⁻, RNH⁻, RCONR⁻, R⁻, CO₃²⁻, PO₄³⁻, SO₄²⁻, NO₃⁻, F⁻, NR₃, R₃NO eingesetzt, wobei R ein Wasserstoffatom, einen substituierten oder unsubstituierten Alkyl-, Cycloalkyl-, Alkenyl-, Cycloalkenyl-, Alkinyl-, Cycloalkinyl-, Aryl- oder Heteroarylrest darstellen kann. Besonders bevorzugt werden als basische Katalysatoren KOH, NaOH, (C₂H₅)₄NOH, C₆H₅CH₂(CH₃)₃NOH, (CH₃)₄NOH und/oder (C₂H₅)₃N eingesetzt. Ganz besonders bevorzugt ist die Verwendung von Ammoniumhydroxiden, wie z.B. (C₂H₅)₄NOH als basischer Katalysator. Die Aufzählung dieser Beispiele soll die Erfindung in keiner Weise einschränken, da jedweder basische Katalysator verwendet werden kann.

Das erfindungsgemäße Verfahren wird so durchgeführt, dass in der Reaktionslösung zu Beginn der Reaktion ein Stoffmengenverhältnis von unvollständig kondensiertem Silasesquioxan zur eingesetzten Base von 1000 : 1 bis 1 : 1, bevorzugt von 100 : 1 bis 2 : 1 und besonders bevorzugt von 20 : 1 bis 5 : 1 vorliegt.

Es kann vorteilhaft sein, die erfindungsgemäße Umsetzung unvollständig kondensierter oligomerer Silasesquioxane mit Alkoxysilanen in Lösung durchzuführen. Als Lösungsmittel kann sowohl ein polares Solvens als auch ein unpolares Solvens verwendet werden.

Bevorzugt werden Alkohole, Ketone, Aldehyde, Ether, Säuren, Ester, Anhydride, Alkane, Aromaten und Nitrile, besonders bevorzugt werden Alkohole, Ether, Aceton, Acetonitril, Benzol und Toluol als Lösungsmittel eingesetzt. Ganz besonders bevorzugt ist die Verwendung von THF, Aceton, Methanol und Ethanol, insbesondere von THF als Lösungsmittel. Selbstverständlich können auch Mischungen dieser Lösungsmittel eingesetzt werden.

Die Konzentration der unvollständig kondensierten oligomeren Silasesquioxane, insbesondere der unvollständig kondensierten Silasesquioxane der Struktur **2** in der Reaktionslösung beträgt in dem erfindungsgemäßen Verfahren zu Beginn der Reaktion bevorzugt von 0.01 mol/l bis 10 mol/l, besonders bevorzugt von 0.1 mol/l bis 2 mol/l und ganz besonders bevorzugt von 0.2 bis 1 mol/l.

Es kann vorteilhaft sein, wenn die Konzentration des Alkoxysilans XₘSi(OR')ₙ in dem erfindungsgemäßen Verfahren zu Beginn der Reaktion die Konzentration des unvollständig kondensierten oligomeren Silasesquioxans übersteigt. Es ist ausreichend, wenn der Alkoxysilanüberschuss gering gehalten wird, jedoch ist ebenso der Einsatz eines deutlichen Überschusses an Alkoxysilan XₘSi(OR')ₙ möglich. Bevorzugt weist die Reaktionslösung zu Beginn der Reaktion einen molaren Überschuss an Alkoxysilan im Vergleich zum unvollständig kondensierten oligomeren Silasesquioxan von bis zu 100%, vorzugsweise von 0,02 bis 20%, besonders bevorzugt von 0,1 bis 5% auf.

Bei der Durchführung des erfindungsgemäßen Verfahrens kann es vorteilhaft sein, wenn dem Reaktionsgemisch Wasser zugesetzt wird. Teilweise reichen aber auch die vorhandenen Spuren an Wasser im Lösemittel aus bzw. erfolgt die Reaktion bzw. der erfindungsgemäße Umsatz ohne das Vorhandensein von Wasser zu Beginn der Reaktion. Bevorzugt beträgt das Stoffmengenverhältnis von Wasser zum unvollständig kondensierten oligomeren Silasesquioxan zu Beginn des Umsatzes von 1000 : 1 bis 0.1 : 1, vorzugsweise von 100 : 1 bis 0.5 : 1, besonders bevorzugt von 10 : 1 bis 1 : 1.

Das erfindungsgemäße Verfahren kann z. B. bei Temperaturen von - 50 bis 300°C durchgeführt werden, bevorzugt ist eine Temperatur von 0 bis 200°C. Besonders bevorzugt wird die Reaktion bei einer Temperatur von 0°C bis 100°C durchgeführt. Es ist durchaus möglich, die Temperatur während des erfindungsgemäßen Umsatzes zu variieren. So kann z. B. die Absenkung der Temperatur zum Ende der Reaktion hin, um das Produkt möglichst vollständig zu isolieren, vorteilhaft sein.

Die folgenden Beispiele sollen die Erfindung näher erläutern, ohne ihren Schutzumfang einzuschränken:

### Beispiel 1: Reaktion von (Isobutyl)₇Si₇O₉(OH)₃ mit 3-Chlorpropyltrimethoxysilan

Zu einer Lösung von 10.0 g (12.6 mmol) (Isobutyl)₇Si₇O₉(OH)₃ in 20 ml THF werden bei 20°C 2.4 ml (13.2 mmol) 3-Chlorpropyltrimethoxysilan gegeben. Nach Zugabe von 0.5 ml Et₄NOH (35% Lösung in H₂O, 1.2 mmol Base, 18 mmol H₂O) wird über Nacht gerührt. Die resultierende weiße Suspension wird mit 100 ml MeOH versetzt. Nach dem Abfiltrieren wird der Rückstand mit zweimal 50 ml Aceton gewaschen. Man erhält 6.0 g (60% Ausbeute) **3** als weißes Pulver.

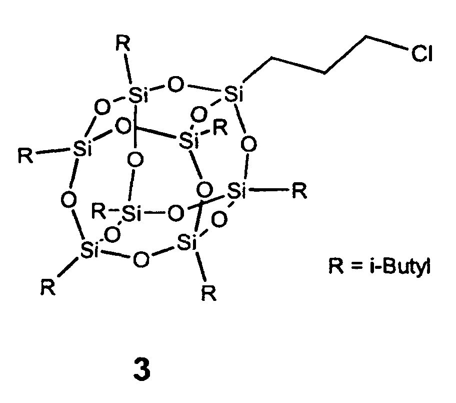

### Beispiel 2: Reaktion von (Isobutyl)₇Si₇O₉(OH)₃ mit Vinyltrimethoxysilan

Zu einer Lösung von 10.0 g (12.6 mmol) (Isobutyl)₇Si₇O₉(OH)₃ in 20 ml THF werden bei 20°C 2.0 ml (13.1 mmol) Vinyltrimethoxysilan gegeben. Nach Zugabe von 0.5 ml Et₄NOH (35% Lösung in H₂O, 1.2 mmol Base, 18 mmol H₂O) wird über Nacht gerührt. Die resultierende trübe Lösung wird mit 200 ml MeOH versetzt. Nach dem Abfiltrieren wird der Rückstand mit 30 ml Aceton gewaschen. Man erhält 6.1 g (60% Ausbeute) **4** als weißes Pulver.

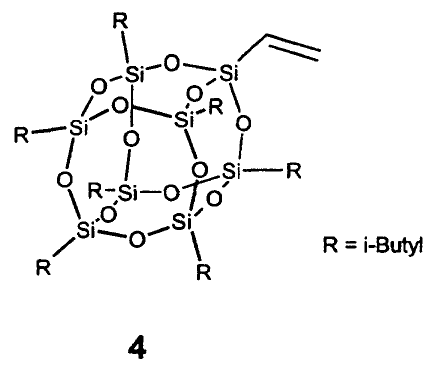

### Beispiel 3: Reaktion von (Isobutyl)₇Si₇O₉(OH)₃ mit 3-Aminopropyltriethoxysilan

Zu einer Lösung von 10.0 g (12.6 mmol) (Isobutyl)₇Si₇O₉(OH)₃ in 20 ml THF werden bei 20°C 3.0 ml (12.8 mmol) 3-Aminopropyltriethoxysilan gegeben. Nach Zugabe von 0.5 ml Et₄NOH (35% Lösung in H₂O, 1.2 mmol Base, 18 mmol H₂O) wird über Nacht gerührt. Die klare Lösung wird daraufhin mit 200 ml MeOH versetzt. Nach dem Abfiltrieren werden 3.1 g (30% Ausbeute) **5** als weißes Pulver erhalten.

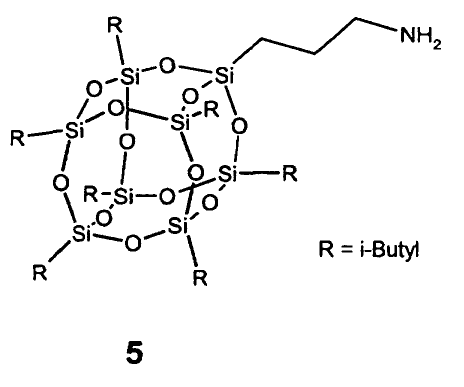

### Beispiel 4: Reaktion von (Isobutyl)₇Si₇O₉(OH)₃ mit N-[3-(Trimethoxysilyl)propyl]-ethylendiamin

Zu einer Lösung von 10.0 g (12.6 mmol) (Isobutyl)₇Si₇O₉(OH)₃ in 20 ml THF werden bei 20°C 2.8 ml (12.8 mmol) N-[3-(Trimethoxysilyl)propyl]-ethylendiamin gegeben. Nach Zugabe von 0.5 ml Et₄NOH (35% Lösung in H₂O, 1.2 mmol Base, 18 mmol H₂O) wird über Nacht gerührt. Die klare Lösung wird daraufhin mit 200 ml MeOH versetzt. Anschließend wird die leicht trübe Lösung mit 100 ml Acetonitril versetzt. Nach dem Abfiltrieren werden 0.7 g (7% Ausbeute) **6** als weißes Pulver erhalten.

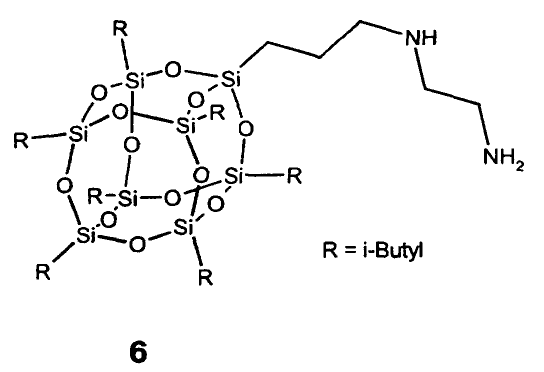

### Beispiel 5: Reaktion von (Isobutyl)₇Si₇O₉(OH)₃ mit 3-(Trimethoxysilyl)propylmethacrylat

Zu einer Lösung von 10.0 g (12.6 mmol) (Isobutyl)₇Si₇O₉(OH)₃ in 20 ml THF werden bei 20°C 3.0 ml (12.6 mmol) 3-(Trimethoxysilyl)propyl-methacrylat gegeben. Nach Zugabe von 0.5 ml Et₄NOH (35% Lösung in H₂O, 1.2 mmol Base, 18 mmol H₂O) wird über Nacht gerührt. Die klare Lösung wird daraufhin mit 200 ml MeOH versetzt. Nach dem Abfiltrieren wird der verbleibende Feststoff mit 30 ml Aceton gewaschen. Man erhält 4.0 g (70% Ausbeute) 7 als weißes Pulver.

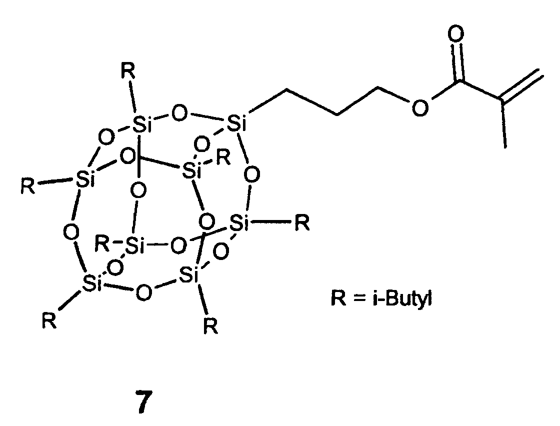

### Beispiel 6: Reaktion von (Isobutyl)₇Si₇O₉(OH)₃ mit Isobutyltrimethoxysilan

Zu einer Lösung von 10.0 g (12.6 mmol) (Isobutyl)₇Si₇O₉(OH)₃ in 20 ml THF werden bei 20°C 2.5 ml Isobutyltrimethoxysilan gegeben. Nach Zugabe von 0.5 ml Et₄NOH (35% Lösung in H₂O, 1.2 mmol Base, 18 mmol H₂O) wird über Nacht gerührt. Die resultierende leicht trübe Lösung wird daraufhin mit 200 ml MeOH versetzt. Nach dem Abfiltrieren wird der verbleibende Feststoff mit 30 ml Aceton gewaschen. Man erhält 4.0 g (40% Ausbeute) **8** als weißes Pulver.

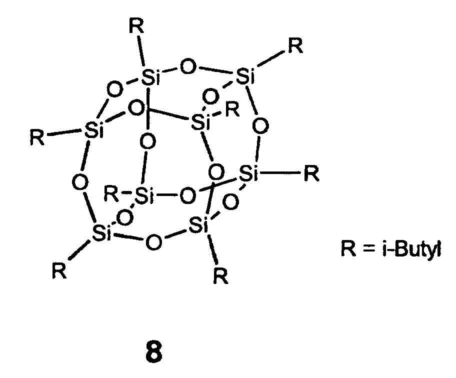

## Patentansprüche

1. Verfahren zur Herstellung funktionalisierter oligomerer Silasesquioxane,
**dadurch gekennzeichnet,**
**dass** unvollständig kondensierte oligomere Silasesquioxane mit Alkoxysilanen unter Basenkatalyse umgesetzt werden und das Stoffmengenverhältnis des unvollständig kondensierten oligomeren Silasesquioxans zum basischen Katalysator von 1000 : 1 bis 1 : 1 beträgt.

2. Verfahren nach Anspruch 1,
**dadurch gekennzeichnet,**
**dass** als Alkoxysilane Verbindungen der Formel XₘSi(OR')ₙ eingesetzt werden,
wobei **X** eine Wasserstoff-, Oxy-, Hydroxy-, Alkoxy-, Carboxy-, Silyl-, Silyloxy-, Halogen-, Epoxy-, Ester-, Fluoralkyl-, Isocyanat-, Acrylat-, Methacrylat-, Nitril-, Amino-, Phosphingruppe, wobei - sofern möglich - diese Reste **X** ihrerseits wiederum weiter funktionalisiert sein können, und/oder einen substituierten oder unsubstituierten Alkyl-, Cycloalkyl-, Alkenyl-, Cycloalkenyl-, Alkinyl-, Cycloalkinyl-, Aryl-, Heteroarylrest, der mit Oxy-, Hydroxy-, Alkoxy-, Carboxy-, Silyl-, Silyloxy-, Halogen-, Epoxy-, Ester-, Fluoralkyl-, Isocyanat-, Acrylat-, Methacrylat-, Nitril-, Amino-, Phosphingruppen funktionalisiert ist, darstellen können. **R'** ein Wasserstoffatom, einen substituierten oder unsubstituierten Alkyl-, Cycloalkyl-, Alkenyl-, Cycloalkenyl-, Alkinyl-, Cycloalkinyl-, Aryl-, Heteroarylrest darstellt und m und n Werte von 1 bis 3 einnehmen können mit der Maßgabe, das die Summe aus m und n 4 ergibt.

3. Verfahren nach Anspruch 1 oder 2,
**dadurch gekennzeichnet,**
**dass** funktionalisierte oligomere Silasesquioxane der Struktur **1** 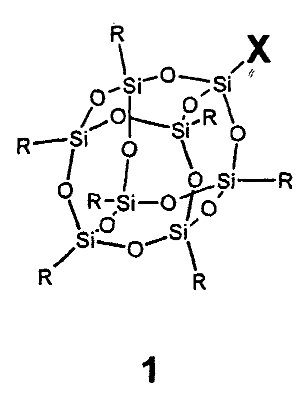 durch Reaktion unvollständig kondensierter oligomerer Silasesquioxane der Struktur 2 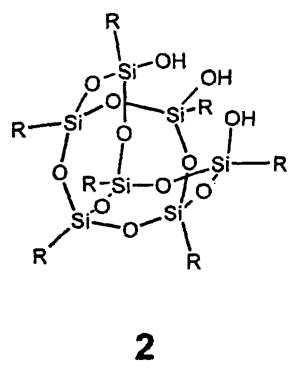 mit Alkoxysilanen XSi(OR')₃ unter Basenkatalyse hergestellt werden,
wobei **X** eine Wasserstoff-, Oxy-, Hydroxy-, Alkoxy-, Carboxy-, Silyl-, Silyloxy-, Halogen-, Epoxy-, Ester-, Fluoralkyl-, Isocyanat-, Acrylat-, Methacrylat-, Nitril-, Amino-, Phosphingruppe, wobei - sofern möglich - diese Reste **X** ihrerseits wiederum weiter funktionalisiert sein können, oder/und einen substituierten oder unsubstituierten Alkyl-, Cycloalkyl-, Alkenyl-, Cycloalkenyl-, Alkinyl-, Cycloalkinyl-, Aryl-, Heteroarylrest, der mit Oxy-, Hydroxy-, Alkoxy-, Carboxy-, Silyl-, Silyloxy-, Halogen-, Epoxy-, Ester-, Fluoralkyl-, Isocyanat-, Acrylat-, Methacrylat-, Nitril-, Amino-, Phosphingruppen funktionalisiert ist, darstellen können, **R** ein Wasserstoffatom, einen substituierten oder unsubstituierten Alkyl-, Cycloalkyl-, Alkenyl-, Cycloalkenyl-, Alkinyl-, Cycloalkinyl-, Aryl-, Heteroarylrest oder ganz oder teilweise eine Gruppe **X** darstellen kann und **R'** ein Wasserstoffatom, einen substituierten oder unsubstituierten Alkyl-, Cycloalkyl-, Alkenyl-, Cycloalkenyl-, Alkinyl-, Cycloalkinyl-, Aryl-, Heteroarylrest darstellen kann.

4. Verfahren nach zumindest einem der Ansprüche 1 bis 3,
**dadurch gekennzeichnet,**
**dass** als basischer Katalysator zumindest einer aus der Gruppe, die OH⁻, RO⁻, RCOO⁻, RNH⁻, RCONR⁻, R⁻, CO₃²⁻, PO₄³⁻, SO₄²⁻, NO₃⁻, F⁻, NR₃ und R₃NO umfasst, eingesetzt wird, wobei R ein Wasserstoffatom, einen substituierten oder unsubstituierten Alkyl-, Cycloalkyl-, Alkenyl-, Cycloalkenyl-, Alkinyl-, Cycloalkinyl-, Aryl- oder Heteroarylrest darstellen kann.

5. Verfahren nach Anspruch 4,
**dadurch gekennzeichnet,**
**dass** als basischer Katalysator KOH, NaOH, (C₂H₅)₄NOH, C₆H₅CH₂(CH₃)₃NOH, (CH₃)₄NOH und/oder (C₂H₅)₃N eingesetzt wird.

6. Verfahren nach Anspruch 5,
**dadurch gekennzeichnet,**
**dass** als basischer Katalysator (C₂H₅)₄NOH verwendet wird.

7. Verfahren nach einem der Ansprüche 1 bis 6,
**dadurch gekennzeichnet,**
**dass** das Umsetzen von unvollständig kondensierten oligomeren Silasesquioxanen mit Alkoxysilanen in Lösung erfolgt.

8. Verfahren nach Anspruch 7,
**dadurch gekennzeichnet,**
**dass** als Lösemittel halogenfreie Systeme ausgewählt Alkoholen, Ketonen, Aldehyden, Ethern, Säuren, Estern, Anhydriden, Alkanen, Aromaten und Nitrilen oder deren Mischungen eingesetzt werden.

9. Verfahren nach Anspruch 8,
**dadurch gekennzeichnet,**
**dass** als Lösungsmittel THF, Aceton, Methanol und Ethanol oder Mischungen dieser Lösungsmittel verwendet werden.

10. Verfahren nach Anspruch 9,
**dadurch gekennzeichnet,**
**dass** als Lösungsmittel THF verwendet wird.

11. Verfahren nach zumindest einem der Ansprüche 7 bis 10,
**dadurch gekennzeichnet,**
**dass** die Konzentration des unvollständig kondensierten oligomeren Silasesquioxans in der Reaktionslösung zu Beginn der Reaktion von 0,01 mol/l bis 10 mol/l beträgt.

12. Verfahren nach Anspruch 11,
**dadurch gekennzeichnet,**
**dass** die Konzentration des unvollständig kondensierten oligomeren Silasesquioxans in der Reaktionslösung zu Beginn der Reaktion von 0,2 mol/l bis 1 mol/l beträgt.

13. Verfahren nach zumindest einem der Ansprüche 1 bis 12,
**dadurch gekennzeichnet,**
**dass** das Stoffmengenverhältnis des unvollständig kondensierten oligomeren Silasesquioxans zum basischen Katalysator von 20 : 1 bis 5 : 1 beträgt.

14. Verfahren nach zumindest einem der Ansprüche 1 bis 13,
**dadurch gekennzeichnet,**
**dass** der Umsatz in Gegenwart von Wasser durchgeführt wird.

15. Verfahren nach Anspruch 14,
**dadurch gekennzeichnet,**
**dass** das Stoffmengenverhältnis von Wasser zu dem unvollständig kondensierten oligomeren Silasesquioxan zu Beginn des Umsatzes von 1000 : 1 bis 0.1 : 1 beträgt.

16. Verfahren nach Anspruch 15,
**dadurch gekennzeichnet,**
**dass** das Stoffmengenverhältnis von eingesetztem Wasser zu dem unvollständig kondensierten oligomeren Silasesquioxan von 10 : 1 bis 1 : 1 beträgt.

17. Verfahren nach zumindest einem der Ansprüche 1 bis 16,
**dadurch gekennzeichnet,**
**dass** die Herstellung der funktionalisierten oligomeren Silasesquioxane bei einer Temperatur von - 50°C bis 300°C durchgeführt wird.

18. Verfahren nach Anspruch 17,
**dadurch gekennzeichnet,**
**dass** die Herstellung der funktionalisierten oligomeren Silasesquioxane bei einer Temperatur von 0°C bis 100°C durchgeführt wird.

## Claims

1. Process for preparing a functionalized oligomeric silsesquioxane, **characterized in that** an incompletely condensed oligomeric silsesquioxane is reacted with an alkoxysilane under base catalysis and the molar ratio of the incompletely condensed oligomeric silsesquioxane to the basic catalyst is from 1000:1 to 1:1.

2. Process according to claim 1, **characterized in that** a compound of the formula XₘSi(OR')ₙ is used as alkoxysilane, where **X** is a hydrogen, oxy, hydroxyl, alkoxy, carboxyl, silyl, silyloxy, halogen, epoxy, ester, fluoroalkyl, isocyanate, acrylate, methacrylate, nitrile, amino, phosphine group, where - where possible - these radicals **X** can in turn be further functionalized, and/or a substituted or unsubstituted alkyl, cycloalkyl, alkenyl, cycloalkenyl, alkynyl, cycloalkynyl, aryl, heteroaryl radical which is functionalized with oxy, hydroxyl, alkoxy, carboxyl, silyl, silyloxy, halogen, epoxy, ester, fluoroalkyl, isocyanate, acrylate, methacrylate, nitrile, amino, phosphine groups, **R'** is a hydrogen atom, a substituted or unsubstituted alkyl, cycloalkyl, alkenyl, cycloalkenyl, alkynyl, cycloalkynyl, aryl, heteroaryl radical, and m and n can adopt values from 1 to 3, with the proviso that the sum of m and n is 4.

3. Process according to claim 1 or 2, **characterized in that** a functionalized oligomeric silsesquioxane of structure 1 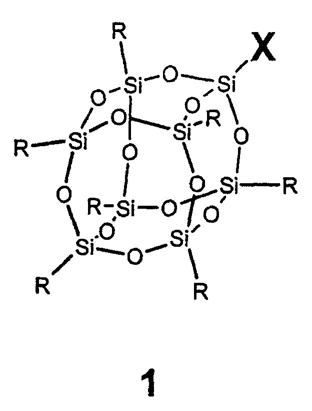 is prepared by reacting an incompletely condensed oligomeric silsesquioxane of structure 2 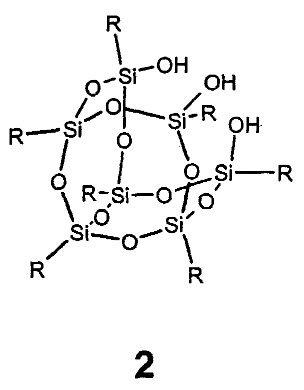 with an alkoxysilane XSi(OR')₃ under base catalysis,
where **X** is a hydrogen, oxy, hydroxyl, alkoxy, carboxyl, silyl, silyloxy, halogen, epoxy, ester, fluoroalkyl, isocyanate, acrylate, methacrylate, nitrile, amino, phosphine group, and - where possible - these radicals **X** may in turn be further functionalized, and/or a substituted or unsubstituted alkyl, cycloalkyl, alkenyl, cycloalkenyl, alkynyl, cycloalkynyl, aryl, heteroaryl radical which is functionalized with oxy, hydroxyl, alkoxy, carboxyl, silyl, silyloxy, halogen, epoxy, ester, fluoroalkyl, isocyanate, acrylate, methacrylate, nitrile, amino, phosphine groups, **R** is a hydrogen atom, a substituted or unsubstituted alkyl, cycloalkyl, alkenyl, cycloalkenyl, alkynyl, cycloalkynyl, aryl, heteroaryl radical or in all or some cases a group **X,** and **R'** is a hydrogen atom, a substituted or unsubstituted alkyl, cycloalkyl, alkenyl, cycloalkenyl, alkynyl, cycloalkynyl, aryl, heteroaryl radical.

4. Process according to at least one of claims 1 to 3, **characterized in that** as basic catalyst at least one from the group consisting of OH⁻, RO⁻, RCOO⁻, RNH⁻, RCONR⁻, R⁻, CO₃²⁻, PO₄³⁻, SO₄²⁻, NO₃⁻, F, NR₃, and R₃NO is used, it being possible for R to be a hydrogen atom, a substituted or unsubstituted alkyl, cycloalkyl, alkenyl, cycloalkenyl, alkynyl, cycloalkynyl, aryl or heteroaryl radical.

5. Process according to claim 4, **characterized in that** KOH, NaOH, (C₂H₅)₄NOH, C₆H₅CH₂(CH₃)₃NOH, (CH₃)₄NOH and/or (C₂H₅)₃N is used as basic catalyst.

6. Process according to claim 5, **characterized in that** (C₂H₅)₄NOH is used as basic catalyst.

7. Process according to any one of claims 1 to 6, **characterized in that** the reaction of incompletely condensed oligomeric silsesquioxane with alkoxysilane takes place in solution.

8. Process according to claim 7, **characterized in that** a halogen-free system selected from alcohols, ketones, aldehydes, ethers, acids, esters, anhydrides, alkanes, aromatics, and nitriles or a mixture thereof is used as solvent.

9. Process according to claim 8, **characterized in that** THF, acetone, methanol, and ethanol or a mixture of these solvents is used as solvent.

10. Process according to claim 9, **characterized in that** THF is used as solvent.

11. Process according to at least one of claims 7 to 10, wherein the concentration of the incompletely condensed oligomeric silsesquioxane in the reaction solution at the beginning of the reaction is from 0.01 mol/l to 10 mol/l.

12. Process according to claim 11, **characterized in that** the concentration of the incompletely condensed oligomeric silsesquioxane in the reaction solution at the beginning of the reaction is from 0.2 mol/l to 1 mol/l.

13. Process according to at least one of claims 1 to 12, **characterized in that** the molar ratio of the incompletely condensed oligomeric silsesquioxane to the basic catalyst is from 20:1 to 5:1.

14. Process according to at least one of claims 1 to 13, **characterized in that** the reaction is carried out in the presence of water.

15. Process according to claim 14, **characterized in that** the molar ratio of water to the incompletely condensed oligomeric silsesquioxane at the beginning of the reaction is from 1000:1 to 0.1:1.

16. Process according to claim 15, **characterized in that** the molar ratio of water that is used to the incompletely condensed oligomeric silsesquioxane is from 10:1 to 1:1.

17. Process according to at least one of claims 1 to 16, **characterized in that** the preparation of the functionalized oligomeric silsesquioxane is carried out at a temperature of from -50°C to 300°C.

18. Process according to claim 17, **characterized in that** the preparation of the functionalized oligomeric silsesquioxane is carried out at a temperature of from 0°C to 100°C.

## Revendications

1. Procédé de fabrication de silsesquioxanes oligomères fonctionnalisés,
**caractérisé en ce que**
on convertit des silsesquioxanes oligomères incomplètement condensés avec des alcoxysilanes sous analyse catalytique et le rapport entre le silsesquioxane oligomère incomplètement condensé et le catalyseur basique est de 1000/1 à 1/1.

2. Procédé selon la revendication 1,
**caractérisé en ce que**
comme alcoxysilanes on utilise des composés de formule XₘSi(OR')ₙ,
X pouvant représenter un groupe hydrogène, oxy, hydroxy, alcoxy, carboxy, silyle, silyloxy, halogène, époxy, ester, fluoroalkyle, isocyanate, acrylate, méthacrylate, nitrile, amino, phosphine, les radicaux X - dans la mesure du possible - pouvant à leur tour continuer à être fonctionnalisés, et/ou un radical substitué ou non substitué alkyle, cycloalkyle, alcényle, cycloalcényle, alcynyle, cycloalcynyle, aryle, hétéroaryle qui est fonctionnalisé avec des groupes oxy, hydroxy, alcoxy, carboxy, silyle, silyloxy, halogène, époxy, ester, fluoroalkyle, isocyanate, acrylate, méthacrylate, nitrile, amino, phosphine, R' représentant un atome d'hydrogène, un radical substitué ou non substitué alkyle, cycloalkyle, alcényle, cycloalcényle, alcynyle, cycloalcynyle, aryle, hétéroaryle, et m et n pouvant prendre des valeurs de 1 à 3, étant précisé que le total de m et n donne 4.

3. Procédé selon la revendication 1 ou 2,
**caractérisé en ce que**
on fabrique le silsesquioxane oligomère fonctionnalisé de structure 1 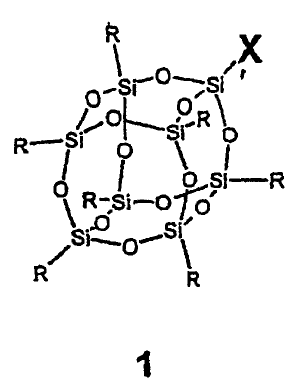 en faisant réagir des silsesquioxanes oligomères incomplètement condensés de structure 2 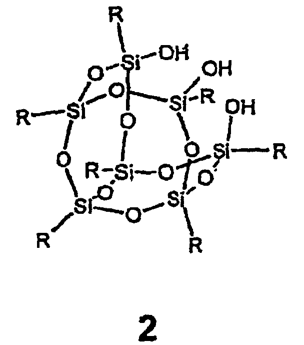 avec des alcoxysilanes Xsi(OR')₃ sous catalyse basique,
X pouvant représenter un groupe hydrogène, oxy, hydroxy, alcoxy, carboxy, silyle, silyloxy, halogène, époxy, ester, fluoroalkyle, isocyanate, acrylate, méthacrylate, nitrile, amino, phosphine, les radicaux X - dans la mesure du possible - pouvant à leur tour continuer à être fonctionnalisés, et/ou un radical substitué ou non substitué alkyle, cycloalkyle, alcényle, cycloalcényle, alcynyle, cycloalcynyle, aryle, hétéroaryle qui est fonctionnalisé avec des groupes oxy, hydroxy, alcoxy, carboxy, silyle, silyloxy, halogène, époxy, ester, fluoroalkyle, isocyanate, acrylate, méthacrylate, nitrile, amino, phosphine, R pouvant représenter un atome d'hydrogène, un radical substitué ou non substitué alkyle, cycloalkyle, alcényle, cycloalcényle, alcynyle, cycloalcynyle, aryle, hétéroaryle ou bien entièrement ou en partie un groupe X, R' pouvant représenter un atome d'hydrogène, un radical substitué ou non substitué alkyle, cycloalkyle, alcényle, cycloalcényle, alcynyle, cycloalcynyle, aryle, hétéroaryle.

4. Procédé selon au moins l'une quelconque des revendications 1 à 3,
**caractérisé en ce que**
comme catalyseur basique, on utilise au moins un du groupe comprenant OH⁻, RO⁻, RCOO-, RNH⁻, RCONR⁻, R⁻, CO₃²⁻, PO₄³⁻, SO₄²⁻, NO₃⁻, F⁻, NR₃, R₃NO, avec R pouvant représenter un atome d'hydrogène, un radical substitué ou non substitué alkyle, cycloalkyle, alcényle, cycloalcényle, alcynyle, cycloalcynyle, aryle ou hétéroaryle.

5. Procédé selon la revendication 4,
**caractérisé en ce que**
comme catalyseur basique on utilise KOH, NaOH, (C₂H₅)₄NOH, C₆H₅CH₂(CH₃)₃NOH, (CH₃)₄NOH et/ou (C₂H₅)₃N.

6. Procédé selon la revendication 5,
**caractérisé en ce que**
comme catalyseur basique, on utilise (C₂H₅)₄NOH.

7. Procédé selon l'une quelconque des revendications 1 à 6,
**caractérisé en ce que**
la conversion de silsesquioxanes oligomères incomplètement condensés est réalisée avec des alcoxysilanes en solution.

8. Procédé selon la revendication 7,
**caractérisé en ce que**
comme solvant on utilise un système sans halogène choisi parmi les alcools, les cétones, les aldéhydes, les éthers, les acides, les esters, les anhydrides, les alcanes, les aromates et les nitriles ou leurs mélanges.

9. Procédé selon la revendication 8,
**caractérisé en ce que**
comme solvant, on utilise du THF, de l'acétone, du méthanol et de l'éthanol ou des mélanges de ces solvants.

10. Procédé selon la revendication 9,
**caractérisé en ce qu'**
on utilise du THF comme solvant.

11. Procédé selon au moins l'une quelconque des revendications 7 à 10,
**caractérisé en ce que**
dans la solution de réaction, la concentration du silsesquioxane oligomère incomplètement condensé est de 0,01 mole/l à 10 moles/l au début de la réaction.

12. Procédé selon la revendication 11,
**caractérisé en ce que**
dans la solution de réaction, au début de la réaction, la concentration du silsesquioxane oligomère incomplètement condensé est de 0,2 mole/l à 1 mole/l.

13. Procédé selon l'une quelconque des revendications 1 à 12,
**caractérisé en ce que**
le rapport entre le silsesquioxane oligomère incomplètement condensé et le catalyseur basique est de 20/1 à 5/1.

14. Procédé selon au moins l'une quelconque des revendications 1 à 13,
**caractérisé en ce que**
la conversion est réalisée en présence d'eau.

15. Procédé selon la revendication 14,
**caractérisé en ce que**
le rapport entre l'eau et le silsesquioxane oligomère incomplètement condensé est de 1000/ 1 à 0,1/1 au début de la conversion.

16. Procédé selon la revendication 15,
**caractérisé en ce que**
le rapport entre l'eau mise en oeuvre et le silsesquioxane oligomère incomplètement condensé est de 10/1 à 1/1.

17. Procédé selon au moins l'une quelconque des revendications 1 à 16,
**caractérisé en ce que**
la fabrication des silsesquioxanes oligomères fonctionnalisés est réalisée à une température de -50°C à 300°C.

18. Procédé selon la revendication 17,
**caractérisé en ce que**
la fabrication des silsesquioxanes oligomères fonctionnalisés est réalisée à une température de 0°C à 100°C.
